# EUROPÄISCHE PATENTSCHRIFT

(11) **EP 2 500 790 B1**
(45) Veröffentlichungstag und Bekanntmachung des Hinweises auf die Patenterteilung: **12.11.2014**
(21) Anmeldenummer: 12001368.5
(22) Anmeldetag: 01.03.2012
(51) Int. Cl.: G05B 19/418, B65G 43/08

(54) **Verfahren zum Betreiben eines Systems mit mehreren zeitlich korrelierten Förderketten**
Method for operating a system with multiple time-correlated transport chains
Procédé de fonctionnement d'un système comprenant plusieurs chaînes de transport corrélées dans le temps

(30) Priorität: 12.03.2011 DE 102011013748
(43) Veröffentlichungstag der Anmeldung: 19.09.2012
(73) Patentinhaber: Eisenmann AG, 71032 Böblingen (DE)
(72) Erfinder: Plewa, Bernd, 04603 Saara (DE)
(74) Vertreter: Ostertag, Ulrich

(56) Entgegenhaltungen:
- EP-A1- 2 234 907
- US-A- 4 011 437
- KUKA Industrial Robots: "Handling of car wheels with a KUKA robot", youtube video , 24. März 2010 (2010-03-24), XP007920738, Gefunden im Internet: URL:www.youtube.com/watch?v=1GQEKyCxPeY [gefunden am 2012-06-20]
- J. Deiterding, D. Henrich: "Workpiece Drift Recognition and Adaptation for Robot Manipulation Tasks", University of Bayreuth, Germany Proceedings of the RAAD 2008,17th International Workshop on Robotics in Alpe-Adria-Danube Region, 17. September 2008 (2008-09-17), XP007920739, Ancona, Italy Gefunden im Internet: URL:citeseerx.ist.psu.edu [gefunden am 2012-06-20]

## Beschreibung

Die Erfindung betrifft ein Verfahren zum Betreiben eines Systems mit mehreren zeitlich korrelierten Förderkettensträngen, die jeweils in regelmäßigen Abständen Halteeinrichtungen für mindestens einen zu fördernden Gegenstand aufweisen, mit
a) einem ersten Förderkettenstrang, der die Gegenstände zu einer ersten Übergabestation bringt;
b) einem zweiten Förderkettenstrang, der die Gegenstände aus der Übergabestation in eine Behandlungsstation bringt;
c) einem ersten Roboter, der in der ersten Übergabestation angeordnet ist und die Gegenstände nacheinander von den Halteeinrichtungen des ersten Förderkettenstrangs abnimmt und auf die Halteeinrichtungen des zweiten Förderkettenstrangs aufbringt;
d) einem dritten Förderkettenstrang, der die Gegenstände aus der Behandlungsstation in eine zweite Übergabestation bringt;
e) einem vierten Förderkettenstrang, der die Gegenstände von der zweiten Übergabestation wegbefördert;
f) einem zweiten Roboter, der in der zweiten Übergabestation angeordnet ist und die Gegenstände von den Halteeinrichtungen des dritten Förderkettenstrangs abnimmt und auf die Halteeinrichtungen des vierten Förderkettenstrangs aufbringt;
g) einem ortsfest am Bewegungsweg des zweiten Förderkettenstrangs angeordneten ersten Sensor, der den Zeitpunkt des Vorbeilaufens einer an den zweiten Förderkettenstrang angebrachten Markierung erkennt und dann ein erstes Signal erzeugt;
h) einem ortsfest am Bewegungsweg des dritten Förderkettenstrangs angeordneten zweiten Sensor, der den Zeitpunkt des Vorbeilaufens einer an dem dritten Förderkettenstrang angebrachten Markierung erkennt und dann ein zweites Signal erzeugt.

Systeme mit mehreren zeitlich korrelierten Förderkettensträngen treten in der Industrie in vielfacher Ausgestaltung auf. Unterschiedliche Förderkettenstränge können dabei nach der hier verwendeten Terminologie Abschnitte unterschiedlicher Förderketten oder auch Abschnitte derselben endlosen Förderkette sein. Ein Beispiel für ein vom Markt her bekanntes System dieser Art ist eine Anlage, in welcher von einer Bepulverungsstation kommende Fahrzeugfelgen einem Einbrennofen zugeführt und nach dem Einbrennen der Beschichtung an eine nachgeschaltete Behandlungsstation weitergegeben werden. Ein erster Roboter nimmt dabei die bepulverten Fahrzeugfelgen von einer zuführenden Förderkette ab und übergibt diese an eine Förderkette, welche in den Einbrennofen führt. Die aus dem Einbrennofen zurückkehrenden Fahrzeugfelgen, deren Beschichtung nunmehr eingebrannt ist, werden von einem zweiten Roboter auf eine weiterführende Förderkette übergeben. Die Verhältnisse in diesem Falle sind so, dass die nachgeschaltete Behandlungsstation zwingend zu festgelegten Zeitpunkten mit Fahrzeugfelgen versorgt werden muss, so dass der Zeitpunkt, zu dem der zweite Roboter eine Fahrzeugfelge auf die abführende Förderkette aufsetzen muss, nur innerhalb eines sehr kleinen Fensters variieren darf. Damit der zweite Roboter von der aus dem Einbrennofen kommenden Förderkette überhaupt zu diesem Zeitpunkt eine Fahrzeugfelge abnehmen kann, muss das Aufsetzen von bepulverten, noch nicht eingebrannten Fahrzeugfelgen auf die zum Einbrennofen führende Förderkette durch den ersten Roboter in exakter zeitlicher Korrelation zur Aktion des zweiten Roboters erfolgen.

Dies geschieht bei dem bekannten System dadurch, dass sowohl in der ersten als auch in der zweiten Übergabestation jeweils ein Sensor vorgesehen ist, der das Vorbeilaufen von Spindeln erfasst, die als Halteeinrichtungen der Förderketten für die Felgen dienen. Die Ausgangssignale dieser beiden Sensoren lösen direkt die jeweiligen Übergaberoutinen der beiden Roboter aus. Bei der Neueinrichtung der Anlage werden die Sensoren so positioniert, dass die richtige zeitliche Korrelation zwischen den Aktionen der beiden Robotern gegeben ist.

Nun können sich allerdings während des Betriebes des Systemes Veränderungen in den Betriebsparametern ergeben, welche die zeitliche Korrelation zwischen den beiden Robotern stört. Ein besonders prominentes Beispiel für eine derartige Änderung eines Betriebsparameters ist eine Kettenlängung, wie sie bei allen Förderketten im Laufe der Zeit unausweichlich ist. Eine solche Kettenlängung kann dazu führen, dass die Übergaberoutine eines Roboters zu einem falschen Zeitpunkt gestartet wird, so dass im Extremfall eine Fahrzeugfelge neben eine Spindel statt auf diese Spindel gesetzt wird oder der Roboter auf eine nächste Spindel warten muss. Dies bedeutet aber eine Störung der zuführenden Kette. Bei dem bekannten System wird dies dadurch verhindert, dass von Zeit zu Zeit manuell die Position eines der beiden Sensoren nachjustiert wird. Dies ist selbstverständlich mit einem erheblichen Aufwand und mit einem Risiko verbunden, da eine ständige Überwachung durch das Personal nicht gewährleistet ist.

Aufgabe der vorliegenden Erfindung ist es, ein Verfahren der eingangs genannten Art anzugeben, bei welchem ohne laufende Überwachung durch das Bedienungspersonal eine korrekte zeitliche Korrelation der Aktionen der beiden Roboter dauerhaft aufrecht erhalten wird.

Diese Aufgabe wird erfindungsgemäß dadurch gelöst, dass
i) der Abstand zwischen den Zeitpunkten der Signale der beiden Sensoren in einem Betriebszustand ermittelt und gespeichert wird, in dem die zeitliche Korrelation zwischen den Übergaben der beiden Roboter korrekt ist;
k) im laufenden Betrieb der Abstand zwischen den Zeitpunkten der Signale der beiden Sensoren kontinuierliche oder intermittierend überwacht wird und aus Abweichungen dieses Abstandes von dem eingespeicherten Abstand der Zeitpunkt des Startes der Übergaberoutine mindestens eines Roboters entsprechend vor- oder zurückverlegt, ein neuer örtlicher Übergabepunkt für den jeweiligen Roboter errechnet und dessen internes Koordinatensystem entsprechend verschoben wird.

Erfindungsgemäß werden also die Übergaberoutinen der beiden Roboter nicht mehr direkt, ohne Umweg über die Anlagensteuerung, durch die Signale der beiden Sensoren eingeleitet. Vielmehr gelangen die Signale beider Sensoren in die Anlagensteuerung, wo ihre zeitliche Abfolge ständig überwacht wird. Bei korrekter zeitlicher Korrelation der beiden Roboter ergibt sich ein bestimmter Abstand zwischen den beiden Signalen, ein "Ideal-Abstand", der beispielsweise Null betragen kann. Die Übergaberoutinen beider Roboter werden dann sofort beim Auftreten der beiden Signale eingeleitet. Dies geschieht mit Hilfe der Anlagensteuerung.

Weicht aber der tatsächlich gemessene zeitliche Ist-Abstand der Signale von dem abgespeicherten Ideal-Abstand ab, so wird der Zeitpunkt, zu dem eine Übergaberoutine mindestens eines Roboters gestartet wird, durch die Anlagensteuerung entsprechend vor- oder zurückgelegt. Dies bedeutet, dass die Übergabe durch den fraglichen Roboter auch an einem anderen Ort als im "Idealzustand" des Systemes erfolgt. Dieser Ort wird von der Anlagensteuerung aus dem zeitlichen Abstand zwischen den beiden Sensorsignalen und der der Anlagensteuerung bekannten Geschwindigkeit des entsprechenden Förderkettenstrangs errechnet. Der oder die Roboter müssen nunmehr die neu errechneten Übergabestellen ansteuern, wozu ihr internes Koordinatensystem durch die Anlagensteuerung entsprechend verschoben wird. Auf diese Weise ist dauerhaft gewährleistet, dass die Korrelation der Aktionen beider Roboter zeitlich korrekt bleibt, ohne dass das Bedienungspersonal hierzu tätig werden muss.

Die Erfindung ist besonders gut dort einsetzbar, wo der zweite Förderkettenstrang und der dritte Förderkettenstrang Abschnitte einer endlosen Förderkette sind, die zwischen den beiden Übergabestationen eine Spannstation besitzt. Um ein solches System handelt es sich bei der eingangs geschilderten Anlage zum Einbrennen der Beschichtung bepulverter Fahrzeugfelgen.

Als Markierungen an den Förderkettensträngen können zweckmäßigerweise Halteeinrichtungen der Förderkettenstränge genutzt werden.

In sehr vielen Fällen ist es wichtig, dass die Aktion des Roboters an der zweiten Übergabestationzu vorgeschriebenen Zeitpunkten stattfinden, wie dies auch bei der oben geschilderten bekannten Anlage der Fall ist. Dann wird zweckmäßigerweise die Übergaberoutine des zweiten Roboters in der zweiten Übergabestation direkt durch das Signal des zweiten Sensors gestartet und der Zeitpunkt des Startes der Übergaberoutine des ersten Roboters in der ersten Übergabestation errechnet und gegebenenfalls entsprechend verlegt. Der zweite Roboter übernimmt auf diese Weise eine Art "Masterfunktion" für den ersten Roboter.

Wie bereits erwähnt, ist ein besonders bevorzugter Anwendungsfall der vorliegenden Erfindung, dass die Gegenstände Fahrzeugfelgen und die Halteeinrichtungen Spindeln sind, auf welche die Fahrzeugfelgen aufsetzbar sind.

Ein Ausführungsbeispiel der Erfindung wird nachfolgend anhand der Zeichnung näher erläutert; es zeigen
- Figur 1: das Layout eines Einbrennofens für bepulverte Fahrzeugfelgen mit den zugehörigen Kettenfördersystemen;
- Figur 2: eine Detailvergrößerung aus Figur 1.

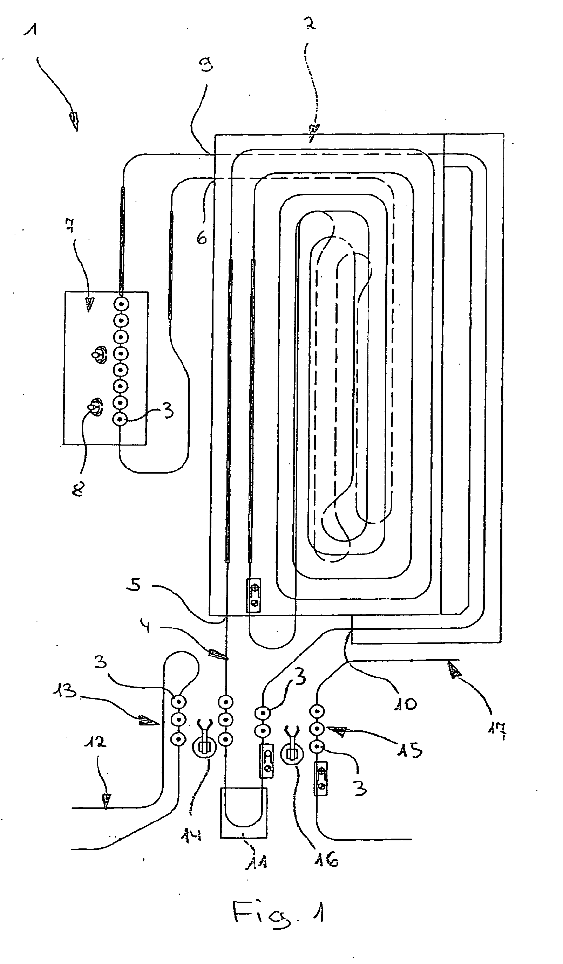

Die in Figur 1 dargestellte und insgesamt mit dem Bezugszeichen 1 gekennzeichnete Anlage zum Einbrennen der Pulverbeschichtung von Fahrzeugfelgen 3 dient der Erläuterung der Problematik, mit welcher sich die vorliegende Erfindung befasst. Sie stellt insofern nur ein Ausführungsbeispiel für zeitlich verknüpfte Kettenfördersysteme dar. Hauptbestandteil dieser Anlage 1 ist ein Einbrennofen 2, der nur schematisch dargestellt ist. Die Fahrzeugfelgen 3, die in der Zeichnung durch Kreise symbolisiert sind, werden dem Einbrennofen 2 über einen Förderkettenstrang 4' eines Kettenförderers 4 an einem Eingang 5 zugeführt. Sie werden dort in verschlungenen Bahnen und in unterschiedlichen Etagen durch verschiedene Behandlungszonen hindurchgeführt, die hier im Einzelnen nicht interessieren und in denen die Pulverbeschichtung auf den Fahrzeugfelgen 3 zunächst aufgeschmolzen und sodann ausgehärtet wird.

Die so behandelten Fahrzeugfelgen 3 verlassen den Einbrennofen 2 an einem Ausgang 6 und werden mit Hilfe des Kettenförderers 4 durch eine Kontroll- und Nachbearbeitungsstation 7 geführt. Dort werden die Fahrzeugfelgen 3 einer visuellen Inspektion und gegebenenfalls manuellen Nachbearbeitung durch Werker 8 unterzogen. Die so kontrollierten und gegebenenfalls nachgearbeiteten Fahrzeugfelgen 3 treten an einem Eingang 9 erneut in den Einbrennofen 2 ein, werden dort durch eine weitere Behandlungsstation geführt, deren Zweck im vorliegenden Zusammenhang ohne Interesse ist, und verlassen den Einbrennofen 2 endgültig an einem weiteren Ausgang 10 auf einem Förderkettenstrang 4''. Der Kettenförderer 4 wird sodann über eine Spannstation 11 geführt und kehrt wieder als Föderkettenstrang 4' zum Eingang 5 des Einbrennofens 2 zurück.

Die bepulverten, also noch nicht eingebrannten Fahrzeugfelgen 3 werden mit Hilfe eines Fördererkettenstrangs 12 zugeführt. Sie befinden sich dabei ebenso wie beim Kettenförderer 4 in hier nicht näher interessierender Weise auf Spindeln 20, die im Wesentlichen vertikal nach oben ragen und gegebenenfalls gedreht werden können. Der Förderkettenstrang 12 bringt die bepulverten Felgen 3 an eine erste Übergabestation 13, wo sie mit Hilfe eines Roboters 14 von den Spindeln 20 des Förderkettenstrangs 12 abgenommen und auf entsprechende Spindeln 20 des Föderkettenstrangs 4' des ersten Kettenförderers 4 umgesetzt werden. Die Spindeln 20 befinden sich dabei in regelmäßigen Abständen voneinander auf dem jeweiligen Förderkettenstrang 4 bzw. 12.

Die den Einbrennofen 2 am Ausgang 10 verlassenden Fahrzeugfelgen 3, deren Beschichtung nunmehr eingebrannt ist, werden vom Förderkettenstrang 4" zu einer zweiten Übergabestation 15 gebracht, wo sie durch einen zweiten Roboter 16 von den Spindeln 20 abgenommen und auf die Spindeln 20 eines weiteren Förderkettenstrangs 17 aufgesetzt werden. Der Förderkettenstrang 17 führt sodann diese Fahrzeugfelgen 3 zu einer nachgeschalteten Behandlungsstation ab.

Die im vorliegenden Zusammenhang interessierende Problematik beim Betreiben der Anlage 1 ist folgende:

Aufgrund der Besonderheiten der der Anlage 1 nachgeschalteten weiteren Behandlungsstation ist es zwingend erforderlich, dass die den Einbrennofen 2 verlassenden Fahrzeugfelgen 3 von dem Roboter 16 zu einem exakt bestimmten Zeitpunkt auf die Spindeln 20 des abführenden Förderkettenstrangs 17 aufgesetzt werden. Zeitliche Verzögerungen sind hier nur innerhalb eines verhältnismäßig kleinen Zeitfensters möglich.

Der Zeitpunkt, zu dem die Fahrzeugfelgen 3 in der zweiten Übergabestation 15 ankommen, hängt dabei idealerweise nur von dem Zeitpunkt, an welchem die bepulverten Fahrzeugfelgen 3 in der Übergabestation 13 auf den Förderkettenstrang 4' aufgesetzt werden, von der Geschwindigkeit des Kettenförderers 4 und von der Strecke ab, die der Kettenförderer 4 zwischen den Übergabestationen 13 und 15 zurücklegt. In diesem idealisierten Fall gibt es also eine exakte berechenbare zeitliche Korrelation zwischen dem Zeitpunkt des Aufsetzens der Fahrzeugfelgen 3 in der Übergabestation 13 auf den Förderkettenstrang 4' und dem Zeitpunkt der Abnahme der Fahrzeugfelgen 3 von dem Förderkettenstrang 4 " in der Übergabestation 16.

Tatsächlich sind die Verhältnisse jedoch nicht so ideal, wie oben angenommen. Insbesondere tritt im Laufe des Betriebes der Anlage 1 eine Längung des Kettenförderers 4 ein. Diese Längung wird zwar in der Spannstation 11 aufgefangen, hat aber zur Folge, dass die von dem Kettenförderer 4 getragenen Spindeln 20 später als gewollt in der ersten Übergabestation 13 ankommen. Dies kann im Extremfall zur Folge haben, dass der Roboter 14 ohne Korrekturmaßnahmen eine Fahrzeugfelge 3 neben eine Spindel 20 des Förderkettenstrangs 4' setzt oder auf eine leere Spindel 20 warten muss, so dass eine Betriebsstörung eintritt. Bisher wurde zur Vermeidung einer solchen Fehlübergabe eine Lichtschranke, welche das Eintreffen einer Spindel 20 in der ersten Übergabestation 13 feststellt, bei Bedarf manuell versetzt, so dass der Roboter 14 zu einem entsprechend früher oder später liegenden Zeitpunkt startet. Diese bisher stattfindende manuelle Korrektur ist jedoch aufwendig und störanfällig.

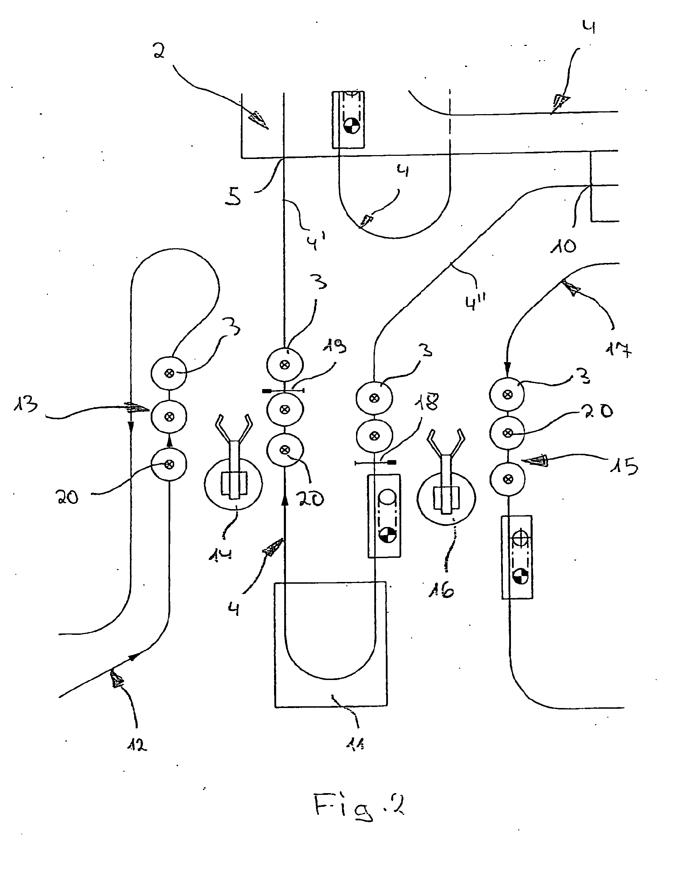

Figur 2 zeigt den Ausschnitt aus der Anlage 1 von Figur 1 in vergrößertem Maßstab, der die beiden Übergabestationen 13 und 15 enthält. In dieser Figur ist in dem Förderkettenstrang 4 " des Kettenförderers 4 zwischen dem Auslass 10 des Einbrennofens 2 und der Kettenspannstation 11 im Bereich der zweiten Übergabestation 15 ein erster Sensor 18, z.B. eine Lichtschranke, schematisch dargestellt, der das Vorbeilaufen einer eine Fahrzeugfelge 3 tragenden Spindel 20 registriert. Der entsprechende Zeitpunkt wird der Anlagensteuerung übermittelt. Zu diesem Zeitpunkt wird der Programmablauf ("Übergaberoutine") des Roboters 16 zur Abnahme einer Fahrzeugfelge 3 von einer (oder derselben) Spindel 20 des Förderkettenstrangs 4 " und zur Übergabe auf eine Spindel 20 des Förderkettenstrangs 17 gestartet.

Auch in dem Förderkettenstrang 4' des Kettenförderers 4 zwischen der Spannstation 11 und dem Einlass 5 des Einbrennofens 2 ist ein Sensor 19 vorgesehen, der den Durchgang einer eine Fahrzeugfelge 3 tragenden Spindel 20 registriert und die im dargestellten Ausführungsbeispiel ebenfalls als Lichtschranke gestaltet ist. Auch dieser Sensor 19 sendet zum Zeitpunkt des Durchganges einer solchen Spindel 20 ein Zeitsignal an die Anlagensteuerung. Dieses Zeitsignal löst nun aber nicht direkt die Übergaberoutine des Roboters 14 aus. Vielmehr wird der fragliche Zeitpunkt in der Anlagensteuerung verglichen mit einem Soll-Zeitpunkt, zu dem die fragliche Spindel 20 im Idealfall bzw. im Neuzustand an dem Sensor 19 vorbeiwandert und der in der Anlagensteuerung abgespeichert ist. Die Anlagensteuerung errechnet die Differenz zwischen dem Soll- und dem Ist-Zeitpunkt der Passage der Spindel 20 an dem Sensor 19, und aus dieser Zeitdifferenz mit Hilfe der bekannten Geschwindigkeit des Kettenförderers 4 eine Kettenlängung. Hieraus lässt sich ein neuer Übergabeort in der Übergabestation 13 errechnen. Der Programmablauf des Roboters 14 wird entsprechend früher gestartet und sein internes Koordinatensystem so verschoben, dass der Greifers des Roboters 14 bei ansonstem normalen Ablauf seines Programmes die in Betracht kommende Spindel 20 zum gewünschten Zeitpunkt an dem errechneten Übergabeort erreicht und dort die Fahrzeugfelge 3 absetzen kann.

Auf diese Weise ist es möglich, den zeitlich verknüpften Ablauf zwischen den Übergaben an den Übergabestationen 13 und 15 kontinuierlich und automatisch aufrecht zu erhalten, unabhängig davon, in welchem Umfange sich im Laufe des Betriebes der Anlage 1 die Transportkette 4 längt oder sonstige Störungen im zeitlichen Zusammenspiel der verschiedenen Systemkomponenten eintreten.

## Patentansprüche

1. Verfahren zum Betreiben eines Systems mit mehreren zeitlich korrelierten Förderkettensträngen (4', 4'', 12, 17), die jeweils in regelmäßigen Abständen Halteeinrichtungen (20) für mindestens einen zu fördernden Gegenstand (3) aufweisen, mit
a) einem ersten Förderkettenstrang (12), der die Gegenstände (3) zu einer ersten Übergabestation (13) bringt;
b) einen zweiten Förderkettenstrang (4'), der die Gegenstände (3) aus der Übergabestation (13) in eine Behandlungsstation (2) bringt;
c) einem ersten Roboter (14), der in der ersten Übergabestation (13) angeordnet ist und die Gegenstände (3) nacheinander von den Halteeinrichtungen (20) des ersten Förderkettenstrangs (12) abnimmt und auf die Halteeinrichtungen (20) des zweiten Förderkettenstrangs (4') aufbringt;
d) einem dritten Förderkettenstrang (4''), der die Gegenstände (3) aus der Behandlungsstation (2) in eine zweite Übergabestation (15) bringt;
e) einem vierten Förderkettenstrang (17), der die Gegenstände (3) von der zweiten Übergabestation (15) wegbefördert;
f) einem zweiten Roboter (16), der in der zweiten Übergabestation (15) angeordnet ist und die Gegenstände (3) nacheinander von den Halteeinrichtungen (20) des dritten Förderkettenstrangs (4'') abnimmt und auf die Halteeinrichtungen (20) des vierten Förderkettenstrangs (17) aufbringt;
g) einem ortsfest am Bewegungsweg des zweiten Förderkettenstrangs (4') angeordneten ersten Sensor (18), der den Zeitpunkt des Vorbeilaufens einer an dem zweiten Förderkettenstrang (4') angebrachten Markierung erfasst und dann ein erstes Signal erzeugt;
h) einem ortsfest am Bewegungsweg des dritten Förderkettenstrangs (4'') angeordneten zweiten Sensor (19), der den Zeitpunkt des Vorbeilaufens einer an dem dritten Förderkettenstrang (4'') angebrachten Markierung erfasst und dann ein zweites Signal erzeugt;
**dadurch gekennzeichnet, dass**
i) der Abstand zwischen den Zeitpunkten der Signale der beiden Sensoren (18, 19) in einem Betriebszustand ermittelt und gespeichert wird, in dem die zeitliche Korrelation zwischen den Übergaben der beiden Roboter (14, 16) korrekt ist;
j) im laufenden Betrieb der Abstand zwischen den Zeitpunkten der Signale der beiden Sensoren (18, 19) kontinuierlich oder intermittierend überwacht wird und aus Abweichungen dieses Abstandes von dem eingespeicherten Abstand der Zeitpunkt des Startes der Übergaberoutine mindestens eines Roboters (14, 16) entsprechend vor- oder zurückverlegt, ein neuer örtlicher Übergabepunkt für den jeweiligen Roboter (14, 16) errechnet und dessen internes Koordinatensystem entsprechend verschoben wird.

2. Verfahren nach Anspruch 1, **dadurch gekennzeichnet,**
**dass** der zweite Förderkettenstrang (4') und der dritte Förderkettenstrang (4'') Abschnitte einer endlosen Förderkette (4) sind, die zwischen den beiden Übergabestationen (13, 15) eine Spannstation (11) besitzt.

3. Verfahren nach Anspruch 1 oder 2, **dadurch gekennzeichnet, dass** als Markierungen an den Förderkettensträngen (4', 4'') die Halteeinrichtungen der Förderkettenstränge (4', 4'') genutzt werden.

4. Verfahren nach einem der vorhergehenden Ansprüche,
**dadurch gekennzeichnet, dass** die Übergaberoutine des zweiten Roboters (16) in der zweiten Übergabestation (15) direkt durch das Signal des zweiten Sensors (19) gestartet und der Zeitpunkt des Startes der Übergaberoutine des ersten Roboters (14) in der ersten Übergabestation (13) errechnet und entsprechend verlegt wird.

5. Verfahren nach einem der vorhergehenden Ansprüche,
**dadurch gekennzeichnet, dass** die Gegenstände Fahrzeugfelgen (3) und die Halteeinrichtungen Spindeln (20) sind, auf welche die Fahrzeugfelgen (3) aufsetzbar sind.

## Claims

1. A process for operating a system having a plurality of time-correlated conveyor chain strands (4', 4'', 12, 17), which each have holding devices (20) at regular spacings for at least one object (3) to be conveyed, having
a) a first conveyor chain strand (12), which brings the objects (3) to a first transfer station (13);
b) a second conveyor chain strand (4'), which brings the objects (3) from the transfer station (13) into a treatment station (2);
c) a first robot (14), which is arranged in the first transfer station (13) and removes the objects (3) in succession from the holding devices (20) of the first conveyor chain strand (12) and brings them onto the holding devices (20) of the second conveyor chain strand (4');
d) a third conveyor chain strand (4''), which brings the objects (3) from the treatment station (2) into a second transfer station (15) ;
e) a fourth conveyor chains strand (17), which conveys the objects (3) away from the second transfer station (15);
f) a second robot (16), which is arranged in the second transfer station (15) and removes the objects (3) in succession from the holding devices (20) of the third conveyor chain strand (4'') and brings them onto the holding devices (20) of the fourth conveyor chain strand (17);
g) a first sensor (18), which is arranged in fixed manner on the movement path of the second conveyor chain strand (4') and records the time at which a marker applied to the second conveyor chain strand (4') is passed and then generates a first signal;
h) a second sensor (4'') which is arranged in fixed manner on the movement path of the third conveyor chain strand (19) and records the time at which a marker applied to the third conveyor chain strand (4'') is passed and then generates a second signal;
**characterised in that**
i) the interval between the signal times of the two sensors (18, 19) is determined and stored in an operating state in which the time-correlation between the transfers of the two robots (14, 16) is correct;
j) during operation, the interval between the signal times of the two sensors (18, 19) is monitored continuously or intermittently and, on the basis of deviations between this interval and the stored interval, the start time of the transfer routine of at least one robot (14, 16) is advanced or delayed accordingly, a new local transfer point for the respective robot (14, 16) is calculated and its internal coordinate system is shifted accordingly.

2. A process according to Claim 1, **characterised in that** the second conveyor chain strand (4') and the third conveyor chain strand (4'') are sections of a continuous conveyor chain (4) which has a tensioning station (11) between the two transfer stations (13, 15).

3. A process according to Claim 1 or 2, **characterised in that** the holding devices of the conveyor chain strands (4', 4'') are used as markers on the conveyor chain strands (4', 4'').

4. A process according to one of the preceding claims, **characterised in that** the transfer routine of the second robot (16) in the second transfer station (15) is started directly through the signal of the second sensor (19) and the start time of the transfer routine of the first robot (14) in the first transfer station (13) is calculated and shifted accordingly.

5. A process according to one of the preceding claims, **characterised in that** the objects are vehicle wheel rims (3) and the holding devices are spindles (20) on which the vehicle wheel rims (3) can be mounted.

## Revendications

1. Procédé d'actionnement d'un système composé de plusieurs brins (4', 4", 12, 17) de chaîne convoyeuse corrélés dans le temps et respectivement pourvus, à intervalles réguliers, de dispositifs de retenue (20) affectés à au moins un objet (3) à convoyer, comprenant
a) un premier brin (12) de chaîne convoyeuse, qui achemine les objets (3) vers un premier poste de transfert (13) ;
b) un deuxième brin (4') de chaîne convoyeuse, qui introduit lesdits objets (3) dans un poste de traitement (2) à partir dudit poste de transfert (13) ;
c) un premier robot (14) situé dans ledit premier poste de transfert (13), qui prélève successivement lesdits objets (3) des dispositifs de retenue (20) dudit premier brin (12) de chaîne convoyeuse, puis les dépose sur les dispositifs de retenue (20) dudit deuxième brin (4') de chaîne convoyeuse ;
d) un troisième brin (4") de chaîne convoyeuse, qui introduit lesdits objets (3) dans un second poste de transfert (15) à partir dudit poste de traitement (2) ;
e) un quatrième brin (17) de chaîne convoyeuse, qui enlève lesdits objets (3) dudit second poste de transfert (15) ;
f) un second robot (16) situé dans ledit second poste de transfert (15), qui prélève successivement lesdits objets (3) des dispositifs de retenue (20) dudit troisième brin (4") de chaîne convoyeuse, puis les dépose sur les dispositifs de retenue (20) dudit quatrième brin (17) de chaîne convoyeuse ;
g) un premier capteur (18) occupant une position fixe sur le trajet de. mouvement du deuxième brin (4') de chaîne convoyeuse, qui détecte l'instant du défilement d'un repère ménagé sur ledit deuxième brin (4') de chaîne convoyeuse, et engendre ensuite un premier signal ;
h) un second capteur (19) occupant une position fixe sur le trajet de mouvement du troisième brin (4") de chaîne convoyeuse, qui détecte l'instant du défilement d'un repère ménagé sur ledit troisième brin (4") de chaîne convoyeuse, et engendre ensuite un second signal ;
**caractérisé par** le fait
i) que l'intervalle, séparant les instants des signaux des deux capteurs (18, 19), est déterminé et mémorisé dans un état fonctionnel dans lequel la corrélation temporelle est correcte entre les transferts effectués par les deux robots (14, 16) ;
j) que ledit intervalle, séparant les instants desdits signaux des deux capteurs (18, 19), est surveillé en mode continu ou intermittent au cours du fonctionnement et, sur la base d'écarts entre cet intervalle et l'intervalle mémorisé, l'instant du démarrage du programme de transfert d'au moins un robot (14, 16) est avancé ou reculé de façon correspondante, un nouveau point local de transfert est calculé pour le robot (14, 16) considéré, et le système interne de coordonnées de ce dernier est décalé de façon correspondante.

2. Procédé selon la revendication 1, **caractérisé par le fait que** le deuxième brin (4') de chaîne convoyeuse, et le troisième brin (4") de chaîne convoyeuse, sont des segments d'une chaîne convoyeuse sans fin (4) qui est dotée d'un poste de tension (11) entre les deux postes de transfert (13, 15).

3. Procédé selon la revendication 1 ou 2, **caractérisé par le fait que** les dispositifs de retenue des brins (4', 4") de chaîne convoyeuse sont utilisés en tant que repères ménagés sur lesdits brins (4', 4") de chaîne convoyeuse.

4. Procédé selon l'une des revendications précédentes, **caractérisé par le fait que** le programme de transfert du second robot (16), dans le second poste de transfert (15), est directement démarré par le signal du second capteur (19), et l'instant du démarrage du programme de transfert du premier robot (14) est calculé et est déplacé de façon correspondante dans le premier poste de transfert (13).

5. Procédé selon l'une des revendications précédentes, **caractérisé par le fait que** les objets sont des jantes (3) de véhicules, et les dispositifs de retenue sont des broches (20) sur lesquelles lesdites jantes (3) de véhicules peuvent être placées.
